Europäisches Patentamt

European Patent Office

Office européen des brevets

(19)

(11) Publication number: **0 327 265**
A2

(12) # EUROPEAN PATENT APPLICATION

(21) Application number: 89300789.8

(22) Date of filing: 27.01.89

(51) Int. Cl.⁴: **B29C 65/20 , H01M 2/00**

(30) Priority: 02.02.88 GB 8802276

(43) Date of publication of application:
09.08.89 Bulletin 89/32

(84) Designated Contracting States:
ES

(71) Applicant: DRG (UK) LIMITED
1 Redcliffe Street
Bristol Avon, BS99 7QY(GB)

(72) Inventor: Hopwood,Robert Timothy
34 Alma Road, Hatherley
Cheltenham, Gloucestershire GL51 5LZ(GB)

(74) Representative: Dunlop, Brian Kenneth
Charles et al
c/o Wynne-Jones, Lainé & James 22 Rodney
Road
Cheltenham Gloucestershire GL50 1JJ(GB)

(54) **Apparatus for use in the manufacture of batteries.**

(57) A lid sealing apparatus is generally indicated at
10. This has a frame 11 which supports a lid storage
system 12, a lid delivery trolley 13, a lid retaining
head 14, a platten 15, a platten storage mechanism
16, a box delivery conveyor 17, box retaining stops
18,19 and a box lifting mechanism 20. Boxes and
lids are first applied to a heat surface of the platten
15 and then the heat sealing surfaces on the lid and
box are subsequently pushed into engagement. The
platten storage mechanism 16 holds a spare platten
which may be pre-heated prior to a tool change over
so that plattens can be changed quickly.

EP 0 327 265 A2

## Apparatus for use in the manufacture of Batteries

This invention relates to apparatus for sealing lids on battery boxes during the manufacture of accumulator batteries.

It has been common for sometime in the industry to seal lids on to battery boxes by heating the lid and the mouth of the battery boxes and then engaging the two under pressure. The seal obtained is satisfactory but there have been problems in constructing a machine which can be changed over rapidly between one size of box and another.

The present invention consists in apparatus for sealing lids on battery boxes, comprising a platten having first and second heatable surface, means for delivering a battery lid to a first position facing the first surface, means for delivering a battery box to a second position facing the second surface, means for engaging the lid and the battery box with respective surface of the platten to heat sealing surfaces on the lid and box and means for subsequently engaging the lid and the box, whilst the heating surfaces are still hot, to seal the sealing surfaces together and hence to seal the lid to the boxes.

The apparatus may further comprise lid storage means for supplying lids, one at a time, from a stack to the lid delivery means. The lid storage means may be in the form of a carousel or other multiple stack holder. It may further comprise hooks or fingers movable between closed position, in which they support a stack of lids and an open position in which they allow the stack to drop on to the lid delivery means, and means for relatively moving the fingers and the lid delivery means apart as the fingers move from their open position to their closed position, so that the stack, less the bottommost lid, is separated from the lid delivery means.

In this case the means for relatively moving the fingers and delivery means may also move the fingers, and hence the stack, and the delivery means together and the apparatus may further include means for opening and closing the fingers in response to relative movement together with and apart from the lid delivery means. Thus the fingers may be mounted on shafts spring loaded to urge the fingers into their closed position and the opening means may comprise a cam on each shaft for engaging the cam way either as the fingers are moved towards the delivery means or as the delivery means moves towards the fingers, whereby the cams rotate the shafts to move the fingers to the open position.

The lid delivery means may comprise a trolley having a jig for receiving a lid and means may be provided for moving the trolley from beneath the lid storage means to the first position.

The apparatus may include lid retaining means at the first position and the trolley may include a jig table mounted on the moving means by a parallel linkage and the apparatus may further include cam means for moving the table upwardly on the parallel linkage to deliver the lid to the lid retaining means. A similar linkage may be used to lift the lid delivery means towards the fingers. In any of these cases it is preferred that the jig is releasably mounted on the trolley to allow for quick tooling changes.

The apparatus may include lid retaining means at the first position. This means may include vacuum means for holding the lid or releasable locking means for mechanically locking the lid to the retaining means. The means for engaging the lid with the platten and the means for engaging the lid with the box may be constituted by the lid retaining means and means for moving them.

The box delivery means may comprise a conveyor and may further include a releasable stop for retaining the box in the second position. The apparatus may provide a cradle for receiving the box in the second position in which case the means for engaging the box with the platten and the means for subsequently engaging the box with the lid may include the cradle and means for moving it.

The cradle may carry a stop for limiting the travel of the cradle towards the lid retaining means and there may be adjustment means for altering the position of the stop, and hence the length of travel, in accordance with the height of a box to be sealed. In between the engagement of the box with the platten and the engagement of the box with the lid the cradle may support the box above the level of the conveyor.

The apparatus may further comprise means for transferring the platten between the operative position located between the first and second positions and a withdrawn position. The platten transfer means may comprise a guide for guiding the platten between its position and means for reciprocating the platten on the guide.

The apparatus may further comprise a further platten, storage means for retaining the further platten in a storage position and means for heating the further platten when it is in the storage position.

The storage means may be in the form of a lift movable between a first station, in which it can receive the first platten from its operative position, and a second station from which the further platten can be moved into the operative position. It will be appreciated that in this arrangement the plattens could be provided with a quick releasable connection to the reciprocating means.

The various elements of the apparatus, such as the platten, the lid delivery means and the lid and box engagement means, may be configured to allow the apparatus to handle a plurality of lids and boxes simultaneously. It is probably preferable to deal with pairs of boxes and lids at a time, but greater numbers could be handled using the same principles. In these cases there may be a stop at the second position for each battery box and means may be provided for adjusting the relative position of the stops.

Although the invention has been defined above, it is to be understood that it includes any inventive combination of the features set out above or in the following description.

The invention may be performed in various ways and a specific embodiment will now be described, by way of example, with reference to the accompanying drawings, in which:-

Figure 1 is a side view of a lid sealing apparatus;

Figure 2 is an end view on the arrow A of the apparatus of Figure 1;

Figure 3 is an enlarged side view of a lid delivery device of the apparatus of Figure 1;

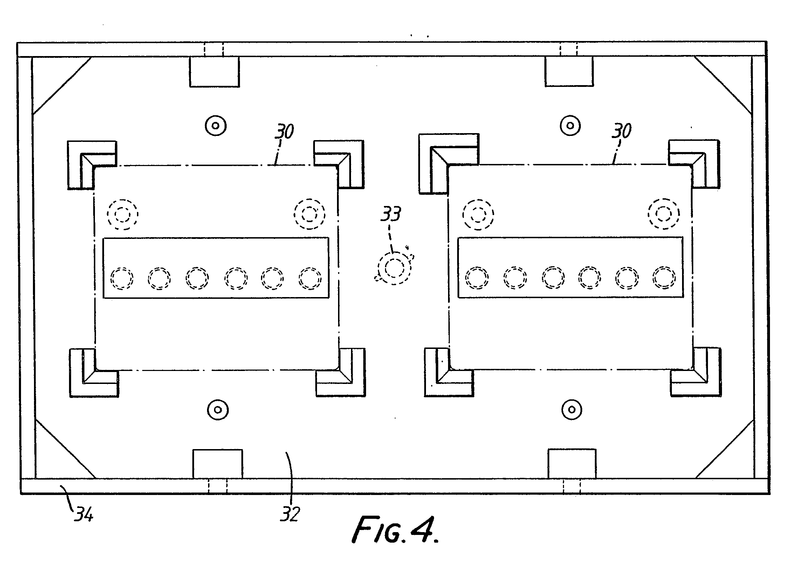

Figure 4 is a view from above of a jig table of a lid delivery system of Figure 1;

Figures 5 and 6 respectively are plan views and a side view of a platten moving system of the apparatus of Figure 1;

Figure 7 is a partially schematic side view of a platten storage system of the apparatus;

Figure 8 is an enlarged side view of a cradle mechanism of the apparatus; and

Figure 9 is a side view, corresponding to Figure 6, of an alternative platten moving system.

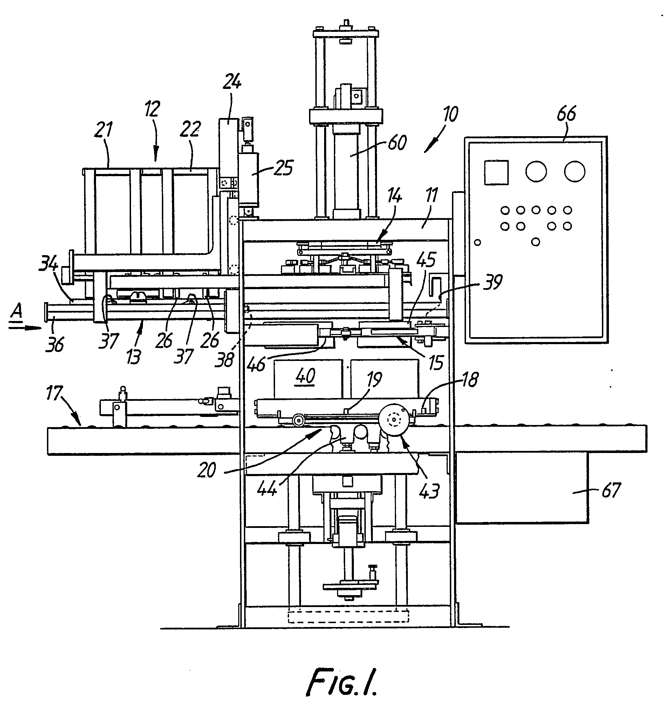

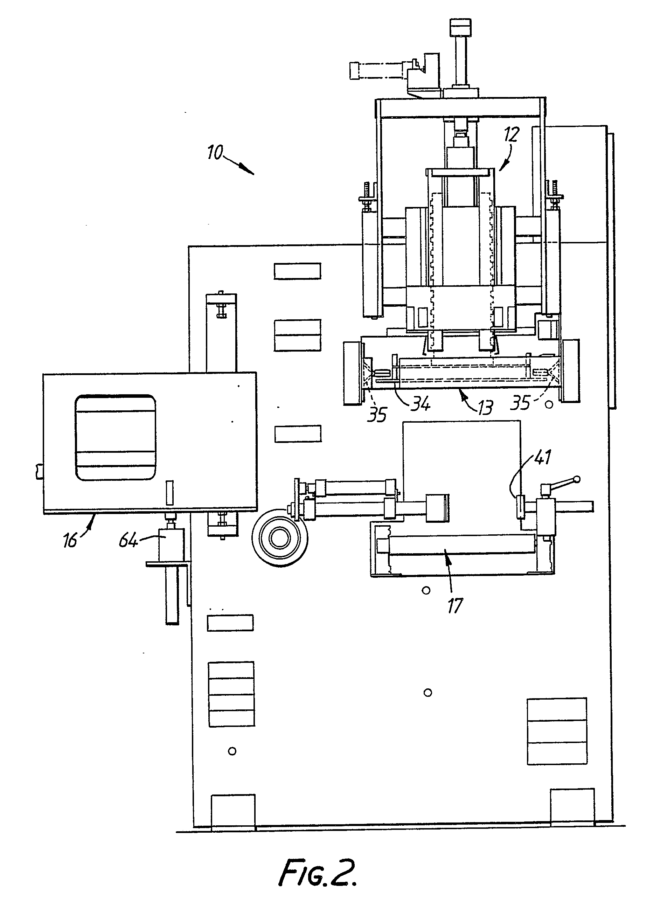

A lid sealing apparatus is generally indicated in Figures 1 and 2, at 10. The apparatus has a frame 11 which supports a lid storage system 12, a lid delivery trolley 13, a lid retaining head 14, a platten 15, a platten storage mechanism 16, a box delivery conveyor 17, box retaining stops 18,19 and a box lifting mechanism 20.

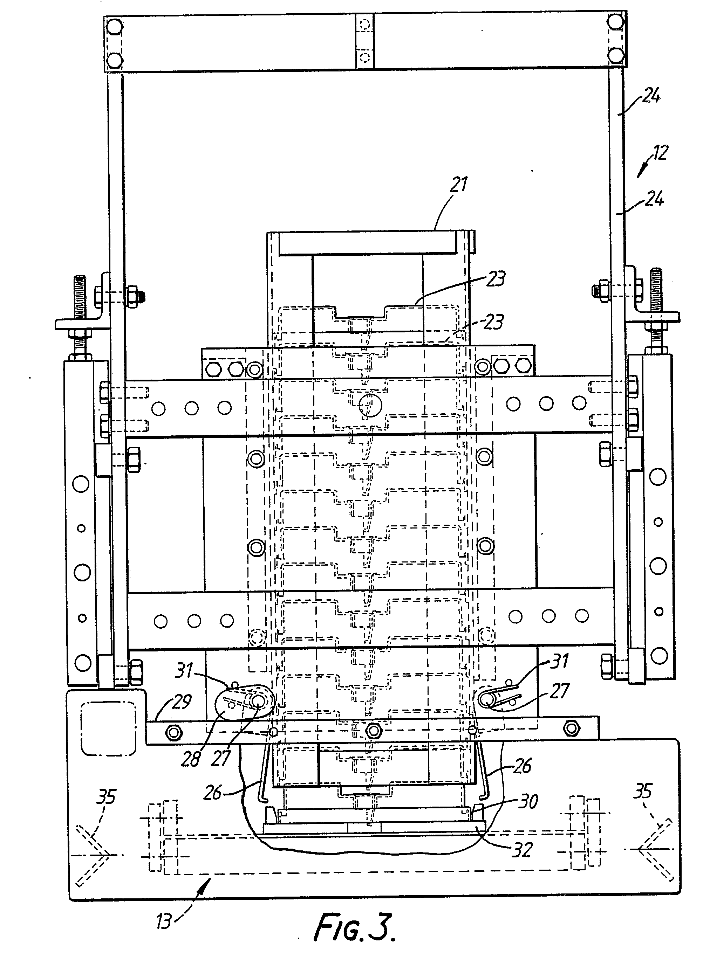

The lid storage system 12 has reservoirs 20,21 for holding respective vertical stacks of battery lids 23. As shown the reservoirs are side-by-side but a carousel system may be advantageous. The reservoirs 20,21 are mounted on a subframe 24 which can be raised and lowered by pneumatic ram 25. At the lower end of each reservoir 21,22 are opposed hooks or fingers 26 which are mounted for rotation on spring loaded shafts 27 which urge the fingers 26 inwardly towards each other so that they support the lids 23 in the stack. On the inner ends of the shafts 27 are mounted cams 28, which are formed to engage a ledge 29 on the main frame 11 as the pneumatic ram 25 lowers the subframe 24. As can be seen in the Figure 3 the resultant rotation of the cams 28 causes the fingers 26 to pivot outwardly releasing the bottom most lid 30 from the stack. The subframe is then lifted and the cams 28 return to their original position under the action of springs 31 so that the rest of the lids 23 are retained in the respective reservoir. In this way the lid storage system 12 can deliver two side-by-side lids 30 to the trolley 13 during each cycle of the apparatus 10.

The lids 30 are received in a jig 32 which is releasably mounted, by a wing nut 33 on a jig table 34. The jig 32 is dimensioned to retain a lid appropriate for the battery size being processed, and this jig can be quickly changed simply by undoing the wing nut 33.

As can best be seen in Figure 2 the trolley 13 is mounted for horizontal movement on guides 35 which extend from under the lid storage system 12 to under the lid retaining head 14. The trolley 13 is connected to a rodless cylinder 36 which pulls the trolley along the guides 35.

The jig table 32 is mounted on the trolley by means of a parallel linkage 37 and carries on its leading edge a cam follower 38. When the rodless cylinder 36 draws the trolley 13 along under the head 14 the cam follower 38 engages a cam 39 which lifts the follower 38 and hence the table 34 up on the parallel linkage 37 so that the lids 30 carried in the jig 32 are pushed into the lid retaining head 14 where they are locked by a vacuum or a mechanical device passing through the apertures in the lids. The trolley 13 is then returned to its position under the lid storage system 12. A similar linkage may be used to lift the trolley 13 as it returns to this position so that the trolley approaches and leaves the reservoirs, providing camming movement for the fingers 26 enabling the reservoirs to remain fixed.

Simultaneously battery boxes 40 are brought in to the apparatus by conveyor 17 and are guided into a lateral position by adjustable guide 41. As the boxes reach positions aligned with the lids in the lid retaining head 14 they are held in those positions on the conveyor by stops 18,19 whose position can be adjusted by a mechanism indicated at 43. In these positions they lie above a cradle 44.

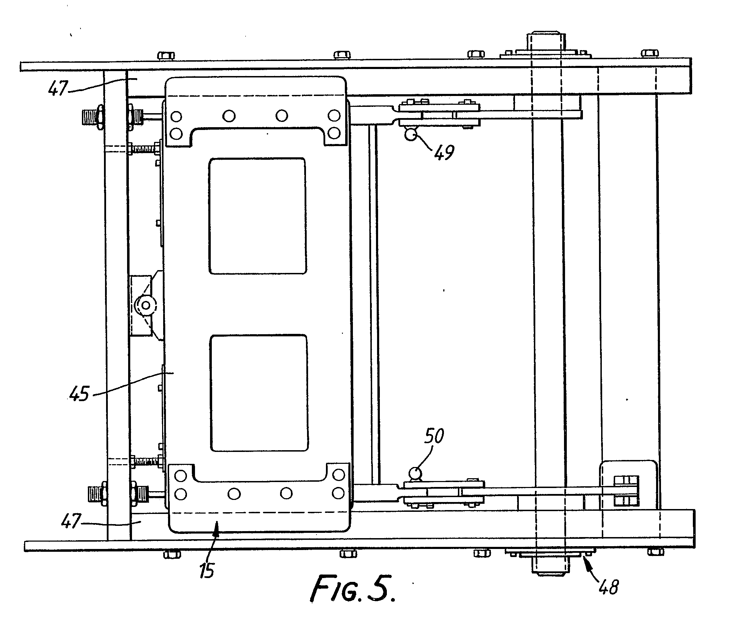

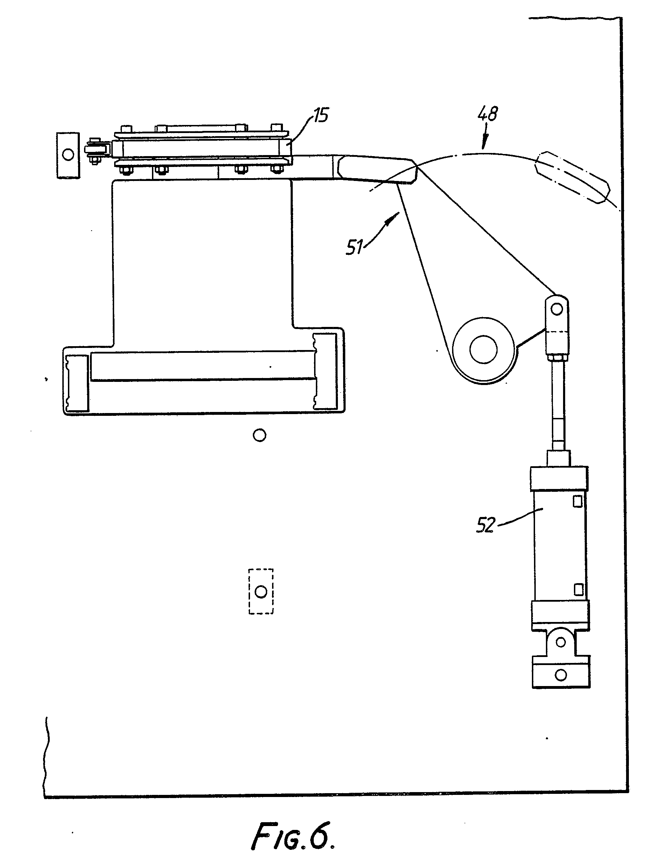

The platten 15 is provided with upper and lower heated surfaces 45,46 which are tooled to suit the dimensions of the battery being processed. The platten 15 is carried for horizontal movement into and out of the operative position shown in Figure 2 by guides 47. As can be seen in Figures 5 and 6 the platten is engaged to an actuating mechanism 48 by quick release bolts at 49,50. The actuating mechanism comprises a rocking toggle 51 and a pneumatic cylinder 52. It has been found that the construction illustrated provides a particularly smooth and accurate movement for the platten.

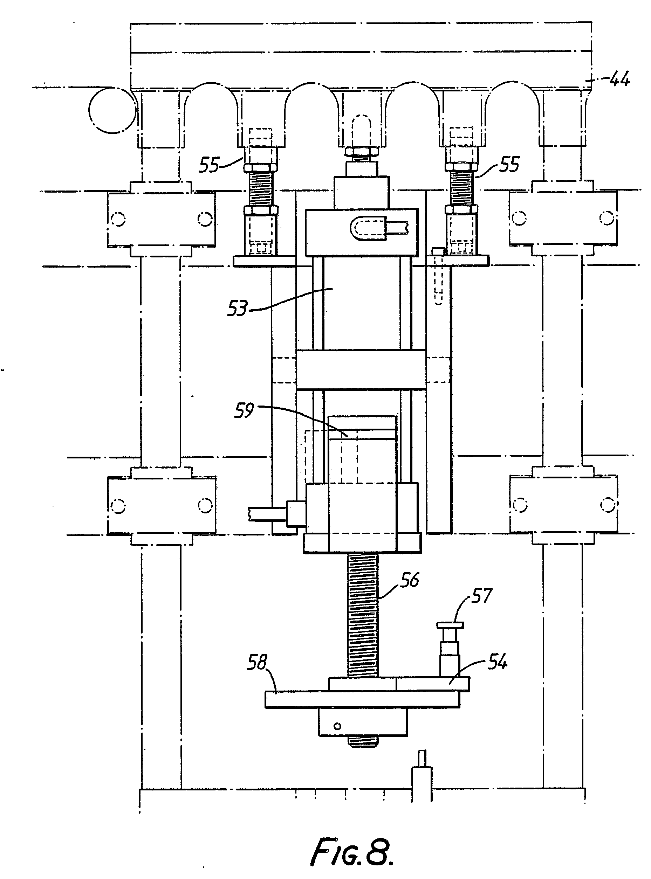

The cradle 44 is more fully illustrated in Figure 8. Here it can be seen that it is mounted for upward and downward movement on a pneumatic ram 53. The upward movement is limited by a stop 54 whilst the downward movement is cushioned by shock absorbers 55. The location of the stop 54 can be adjusted on the threaded shaft 56 by rotation of a plate 58 and can be locked in a selected position by means of a spring loaded pin 57 which penetrates the plate 58. The desired position for any given battery size can easily be obtained by locking a battery box between a reference flange 59 and the stop 54 and adjusting the position of the stop 54 until it just engages the bottom of the box.

In use lids are delivered to the lid retaining head 14 as has already been described, and similar boxes 40 are retained over the cradle 44. The lid retaining head is then lowered by pneumatic ram 60 until the lids engage the upper heated surface 45 of the platten 15 and simultaneously the boxes 30 are lifted on the cradle 44 by pneumatic ram 53 to engage them against the heated surface 46. The two surfaces 45,46 are formed to engage and heat sealing surfaces on the lids and boxes and when the heating has taken place the platten 15 is withdrawn by the actuator mechanism 48. The cradle 44 is initially lowered to a position just above the conveyor 17; then the head 14 and cradle 44 are towards each other until the lids 30 engage on the boxes 40 and are sealed thereto under the pressure of pneumatic ram 60. The cradle 44 then drops the boxes 40 back onto the conveyor 17 and they are released by the stops 18,19.

The above described apparatus provides for extremely quick processing of the battery boxes and avoids destructive loading of any of the elements. It also has a further considerable advantage in that it is possible to change quickly the tooling in the machine so that batteries of a different size can be processed.

Thus, as has already been mentioned, the jig 32 can readily be changed on the jig table 34 and similar jigs can be replaced on the head 14. The cradle travel can further be adjusted as mentioned above. This however, leaves the platten 15 and until now plattens have caused very considerable delays because even when the new platten is installed in the apparatus it has to be heated up to a working temperature.

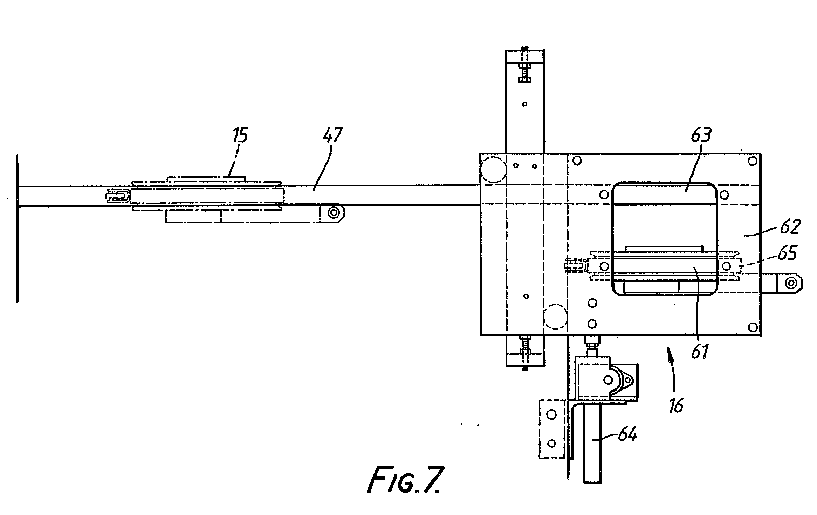

As can be seen in Figure 7 the Applicants have a spare platten 61, which has been made up with the tooling for the next run, stored in a storage lift 62. When it is desired to change the plattens the pins 49,50 are undone releasing the platten 15 from its actuating mechanism 48. It is then drawn rearwardly on the guides 47 up to the lift 62 which has its own set of guides 63 which, in the position shown in Figure 7, are aligned with the guides 47. Once the platten 15 is in the lift 62, a pneumatic ram 64 raises the lift 62 until guides 65,which support the spare platten 61, are then aligned with guides 47. The spare platten 61 can then be transferred onto the guides 47 and coupled up with the actuating mechanism 48. Whilst it is in the lift it is coupled to an electrical supply and so it is already heated to its working temperature when it is moved into the operative position. Accordingly, the down time for the Applicant's apparatus during tooling change over is exeptionally short.

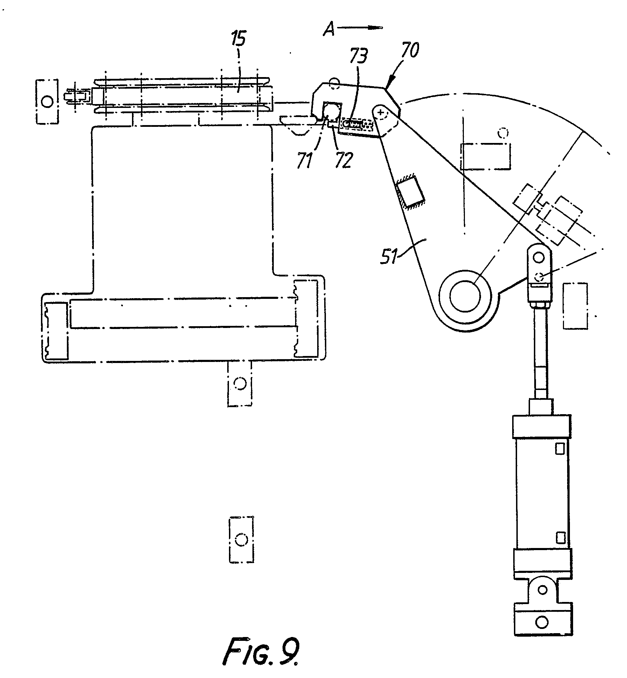

Figure 9 illustrates a further form of coupling between the platten 15 and the toggle 51. This takes the form of a pair of clips, one of which is shown at 70 which engage a bar 71 on the platten. The bar 71 is detained within the clips 70 by means of spring latches 72, which can be released by movement of a rod 73, in the direction of the Arrow A, which couples the latches 72 and extends widthways of platten 15. This system allows for a particularly quick release of the old platten and engagement of the new.

In order to further enhance the quick change over which can be achieved with the Applicant's apparatus, the stops 18,19 may be adjustable between discrete positions corresponding to known battery box sizes rather than providing an infinitely variable adjustment. Similarly, guide 41 may be movable between discrete positions.

It will be noted that the electrical and pneumatic controls for the apparatus are provided at 66 and there is a conveyor drive unit at 67.

## Claims

1. Apparatus for sealing lids on battery boxes, comprising a platten having first and second heatable surfaces, means for delivering a battery lid to a first position facing the first surface, means for delivering a battery box to a second position facing the second surface, means for engaging the lid and the battery box with respective surfaces of the platten to heat sealing surfaces on the lid and box and means for subsequently engaging the lid and box, whilst the sealing surfaces are still hot, to seal the sealing surfaces together and hence to seal the lid to the box.

2. Apparatus as claimed in Claim 1 further comprising means for transferring the platten between an operative position located between the first and second positions, and a withdrawn position.

3. Apparatus as claimed in Claim 2 wherein the platten transfer means comprises a guide for guiding the platten for generally straight line movement and means for reciprocating the platten on the guide.

4. Apparatus as claimed in claim 2 wherein the reciprocating includes quick release means for engaging the platten.

5. Apparatus as claimed in any one of the preceding claims comprising a further platten, storage means for retaining the further platten in a storage position and means for heating the further platten when it is in the storage position.

6. Apparatus as claimed in Claim 4 wherein the storage means is in the form of a lift movable between a first station in which it can receive the first platten from its operative position and a second station from which the further platten can be moved into the operative position.

7. Apparatus as claimed in any one of the preceding claims comprising lid storage means for supplying lids, one at a time, from a stack to the lid delivery means.

8. Apparatus a claimed in Claim 7 wherein the lid storage means further comprises hooks or fingers movable between a first or closed position, in which they support the stack of lids, and an open or second position in which they allow the stack to drop onto the lid delivery means, and means for relatively moving the fingers and the lid delivery means apartas the fingers move from their open position into their closed position so that the stack, less the bottommost lid, is separated from the lid delivery means.

9. Apparatus as claimed in Claim 8 wherein the means for relatively moving the fingers and delivering means also moves the fingers, and hence the stack, and the lid delivery means together and further including means for opening and closing the fingers in response to the relative movement together with and apart from the lid delivery means.

10. Apparatus as claimed in Claim 9 wherein the fingers are mounted on shafts spring loaded to urge the fingers into their closed position and wherein the opening means comprise a cam on each shaft for engaging a cam-way either as the fingers are moved towards the delivery means or as the delivery means are moved towards the fingers, whereby the cams rotate the shafts to move the fingers to the open position.

11. Apparatus as claimed in any one of the preceding claims wherein the lid delivery means comprise a trolley having a jig for receiving a lid and means for moving the trolley from beneath the lid storage means to the first position.

12. Apparatus as claimed in Claim 11 further comprising lid retaining means at the first position and wherein the trolley includes a jig table mounted on the moving means by a parallel linkage and wherein the apparatus further includes cam means for moving the table upwardly on the parallel linkage to deliver the lid to the lid retaining means and/or the lid storage means.

13. Apparatus as claimed in Claim 11 or Claim 12 wherein the jig is releasably mounted on the trolley.

14. Apparatus as claimed in any one of the preceding claims including lid retaining means at the first position.

15. Apparatus as claimed in Claim 14 wherein the lid retaining means includes vacuum means for holding the lid.

16. Apparatus as claimed in Claim 15 wherein the lid retaining means includes releasable locking means for mechanically locking the lid to the retaining means.

17. Apparatus as claimed in any one of claims 13 to 15 wherein the means for engaging the lid with the platten and means for engaging the lid with the box include the lid retaining means and means for moving the lid retaining means.

18. Apparatus as claimed in any one of the preceding claims wherein the box delivery means comprises a conveyor and further including a releasable stop for retaining the box in the second position.

19. Apparatus as claimed in Claim 18 further including a cradle for receiving the box in the second position.

20. Apparatus as claimed in Claim 19 wherein the means for engaging the box with the platten and the means for subsequently engaging the box with the lid include means for moving the cradle.

21. Apparatus as claimed in Claim 20 wherein the cradle carries a stop for limiting the travel of the cradle towards the lid retaining means and means for adjusting the position of the stop, and hence the length of travel, in accordance with the height of a box to be sealed.

22. Apparatus as claimed in any one of claims 19 to 21 wherein in between the engagement of the box with the platten and the engagement of the box with the lid the cradle supports the box above the level of the conveyor.

23. Apparatus as claimed in any one of the preceding claims wherein in the platten, the lid delivery means, the box delivery means, the lid engagement means, the box engagement means and the means for subsequently engaging the box and lid are all configured to process a plurality of lids and box simultaneously.

24. Apparatus as claimed in Claim 23 further including a stop at the second position for each battery box and means for adjusting the relative positions of the stops.

25. Apparatus for sealing lids on battery boxes including a plurality of heatable plattens, means for storing at least some of the plattens and means for transferring a platten from the storage position to an operative position.

26. Apparatus for sealing lids substantially as hereinbefore described with reference to the accompanying drawings.

FIG.I.

FIG.2.

FIG.3.

EP 0 327 265 A2

*FIG.4.*

30

30

33

34

32

FIG. 5.

EP 0 327 265 A2

FIG.6.

FIG.7.

EP 0 327 265 A2

FIG.8.

FIG. 9.